(19) Europäisches Patentamt
European Patent Office
Office européen des brevets

(11) Veröffentlichungsnummer: **0 610 850 A1**

(12) **EUROPÄISCHE PATENTANMELDUNG**

(21) Anmeldenummer: **94101803.8**

(51) Int. Cl.5: **C08F 32/08**, C07F 17/00

(22) Anmeldetag: **07.02.94**

(30) Priorität: **12.02.93 DE 4304292**

(43) Veröffentlichungstag der Anmeldung:
**17.08.94 Patentblatt 94/33**

(84) Benannte Vertragsstaaten:
**DE FR GB IT NL**

(71) Anmelder: **HOECHST AKTIENGESELLSCHAFT**
**Brüningstrasse 50**
**D-65929 Frankfurt am Main (DE)**

(72) Erfinder: **Rohrmann, Jürgen, Dr.**
**Hainpfad 5**
**D-65779 Kelkheim/Taunus (DE)**
Erfinder: **Brekner, Michael-Joachim, Dr.**
**Geisenheimer Strasse 90**
**D-60529 Frankfurt (DE)**
Erfinder: **Küber, Frank, Dr.**
**Bleibiskopfstrasse 10**
**D-61440 Oberursel (DE)**
Erfinder: **Osan, Frank, Dr.**
**Hattersheimer Strasse 27-29**
**D-65779 Kelkheim/Taunus (DE)**
Erfinder: **Weller, Thomas, Dr.**
**Am Jungstück 42**
**D-55130 Mainz (DE)**

(54) **Verfahren zur Herstellung von Cycloolefinpolymeren.**

(57) Cycloolefinpolymere mit niedriger Viskositätszahl werden erhalten durch Polymerisation eines polycyclischen Olefins und gegebenenfalls eines acyclischen Olefins und/oder eines monocyclischen Olefins in Gegenwart eines Katalysatorsystems, welches aus einem Aluminoxan und einer Metallocenverbindung der Formel

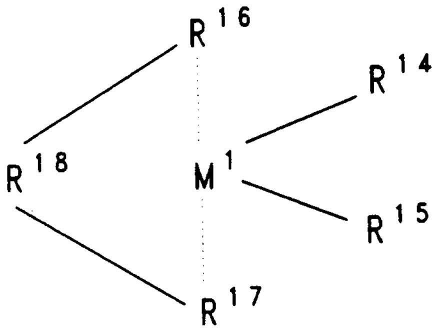

besteht, worin $R^{16}$ Fluorenyl und $R^{17}$ Cyclopentadienyl bedeutet und mindestens einer der beiden Reste $R^{16}$ und $R^{17}$ substituiert ist.

EP 0 610 850 A1

Die Erfindung betrifft ein Verfahren zur Herstellung von Cycloolefinhomo- und copolymeren mit niedriger Viskositätszahl, wobei keine Ringöffnung erfolgt und auf eine Wasserstoffdosierung verzichtet werden kann.

Mit Metallocen-Aluminoxan-Katalysatorensystemen können Cycloolefinhomo- und -copolymere hergestellt werden. Die Polymerisation der Cycloolefine verläuft dabei in Gegenwart löslicher Metallocenkatalysatoren in Masse oder Lösungsmitteln unter Erhalt von Cyclen an der Doppelbindung (EP 407870, EP 485893). Als Lösungsmittel werden hauptsächlich Kohlenwasserstoffe eingesetzt.

Cycloolefincopolymere mit einer hohen Einbaurate an Cycloolefin sowie Cycloolefinhomopolymere besitzen aufgrund ihrer hohen Glastemperatur eine hohe thermische Formbeständigkeit und sind deshalb interessante Werkstoffe, die als thermoplastische Formmassen Verwendung finden. Die mechanischen Eigenschaften werden also hauptsächlich durch das Verhältnis der eingebauten Comonomere bestimmt, das durch den Glaspunkt Tg charakterisiert ist. Für Spritzguß- und insbesondere Dünnwandspritzguß-Anwendungen ist darüber hinaus eine niedrige Schmelzeviskosität Voraussetzung.

Die Schmelzeviskosität von Cycloolefinpolymeren steigt bei gegebener Verarbeitungstemperatur und Glastemperatur mit dem mittleren Molekulargewicht und damit der Viskositätszahl VZ an.

Die Viskositätszahl von Cycloolefinpolymeren ist somit ein Maß für die Verarbeitbarkeit in der Schmelze. Außerdem bestimmt sie die Viskosität des Reaktionsgemisches und damit den maximal erreichbaren Feststoffgehalt bei der Polymerisation.

Im Stand der Technik werden hauptsächlich zwei Verfahren beschrieben, um bei gegebener Glastemperatur die Viskositätszahl von Cycloolefinpolymeren zu reduzieren. So kann die Viskositätszahl entweder durch Erhöhung der Polymerisationstemperatur oder durch Wasserstoffdosierung verringert werden.

Da sich mit steigender Polymerisationstemperatur die Stereoregularität der Polymeren verringert und außerdem verstärkt Nebenreaktionen auftreten (hauptsächlich radikalischer Natur), wodurch die Bildung von Gelteilchen induziert werden kann, sind der temperaturinduzierten Reduzierung der Viskositätszahl deutliche Grenzen gesetzt.

Die Wasserstoff-Technik andererseits erfordert eine sehr aufwendige Meß- und Regeltechnik, was mit einem hohen Investitionsaufwand verbunden ist. Werden bi- oder multimodale Molekulargewichtsverteilungen angestrebt, so muß bei der Wasserstoffregelung die Polymerisation außerdem in räumlich getrennten Stufen erfolgen, was eine zusätzliche Komplizierung und Verteuerung des Verfahrens darstellt.

Aufgabe der Erfindung war, ein Verfahren zu entwickeln, welches sich zur Herstellung von spritzgußtauglichen Cycloolefinhomopolymeren und - copolymeren mit guten mechanischen Eigenschaften, bei dem die Nachteile des Standes der Technik vermieden werden können. Außerdem sollen durch Einsatz von Mischungen verschiedener Metallocene Cycloolefinpolymere niedriger Viskositätszahl mit bi- oder multimodaler Molekulargewichtsverteilung hergestellt werden, ohne daß die Polymerisation in räumlich getrennten Stufen durchgeführt wird.

Es wurde gefunden, daß diese Aufgaben durch Verwendung bestimmter Metallocen-Katalysatoren bzw. deren Mischungen gelöst werden. Die Polymerisation wird im flüssigen Cycloolefin selbst oder in verdünnter Cycloolefin-Lösung durchgeführt, wobei zweckmäßigerweise die Temperatur oberhalb Raumtemperatur und der Druck oberhalb 1 bar liegt.

Die Erfindung betrifft somit ein Verfahren zur Herstellung eines Cycloolefinhomopolymers oder -copolymers durch Polymerisation von 0,1 bis 100 Gew.-%, bezogen auf die Gesamtmenge der Monomeren, mindestens eines polycyclischen Olefins der Formeln I, II, III, IV, V oder VI

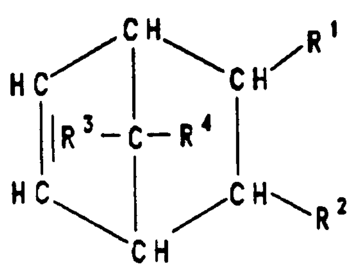

(I),

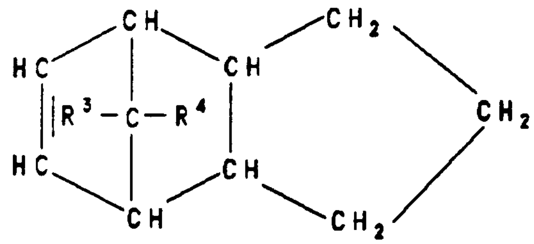

(II),

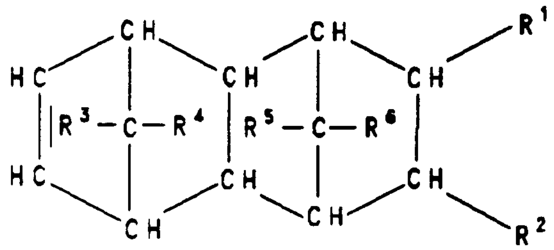

(III),

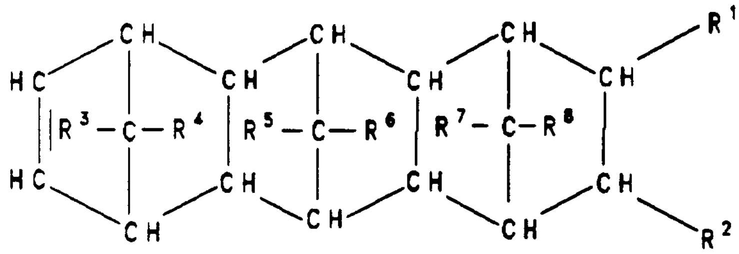

(IV),

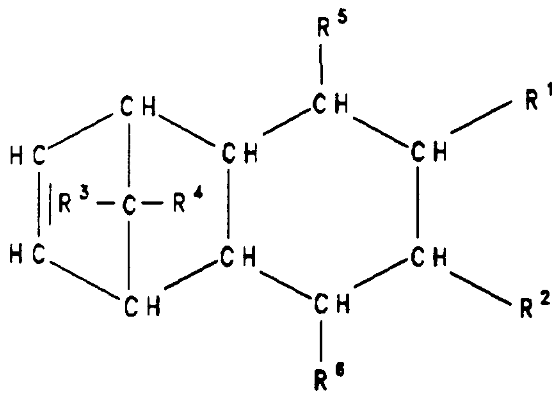

(V),

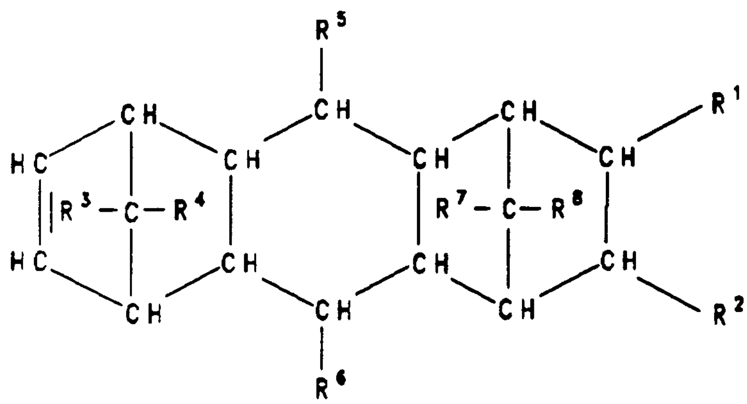

(VI),

worin $R^1$, $R^2$, $R^3$, $R^4$, $R^5$, $R^6$, $R^7$ und $R^8$ gleich oder verschieden sind und ein Wasserstoffatom oder einen Kohlenwasserstoffrest bedeuten, wobei gleiche Reste in den verschiedenen Formeln eine unterschiedliche Bedeutung haben können, 0 bis
99,9 Gew.-%, bezogen auf die Gesamtmenge der Monomeren, eines Cycloolefins der Formel VII

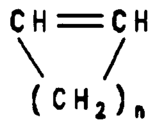

(VII),

worin n eine Zahl von 2 bis 10 ist, und 0 bis 99,9 Gew.-%, bezogen auf die Gesamtmenge der Monomeren, mindestens eines acyclischen 1-Olefins der Formel VIII

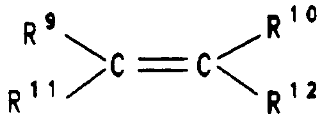

(VIII),

worin $R^9$, $R^{10}$, $R^{11}$ und $R^{12}$ gleich oder verschieden sind und ein Wasserstoffatom oder einen Kohlenwasserstoffrest bedeuten, bei Temperaturen von 20 bis 150 °C und einem Druck von 0,01 bis 64 bar, in Gegenwart eines Katalysators, welcher aus einem Aluminoxan der Formel IX

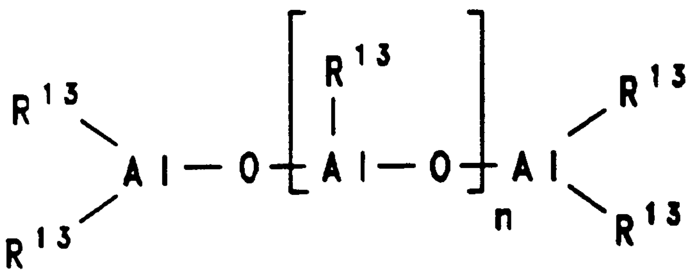

(IX)

für den linearen Typ und/oder der Formel X

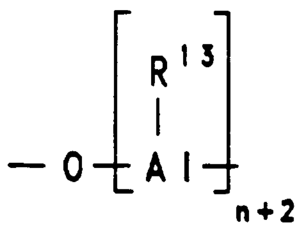

(X)

für den cyclischen Typ, wobei in den Formeln IX und X der Rest $R^{13}$ eine $C_1$-$C_6$-Alkylgruppe oder Phenyl oder Benzyl bedeutet und n eine ganze Zahl von 2 bis 50 ist, und einem Metallocen der Formel XI

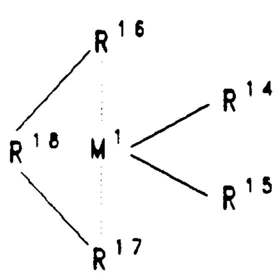

(XI)

besteht, worin

| | |
|---|---|
| $M^1$ | Titan, Zirkon, Hafnium, Vanadium, Niob oder Tantal ist, |
| $R^{14}$ und $R^{15}$ | gleich oder verschieden sind und ein Wasserstoffatom, ein Halogenatom oder einen |

kohlenstoffhaltigen Substituenten, z.B. eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe oder eine $C_8$-$C_{40}$-Arylalkenylgruppe bedeuten,

$R^{16}$ eine Fluorenylgruppe und $R^{17}$ eine Cyclopentadienylgruppe bedeutet,

$R^{18}$

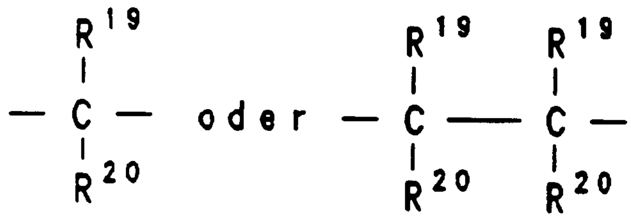

bedeutet, worin $R^{19}$ und $R^{20}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^{19}$ und $R^{20}$ jeweils mit den sie verbindenden Atomen einen Ring bilden,

dadurch gekennzeichnet, daß mindestens einer der beiden Reste $R^{16}$ und $R^{17}$, einen oder mehrere Reste $R^{21}$ trägt, die gleich oder verschieden sind, wobei $R^{21}$ eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeutet.

Im erfindungsgemäßen Verfahren wird mindestens ein polycyclisches Olefin der Formeln I, II, III, IV, V oder VI vorzugsweise ein Cycloolefin der Formeln I oder III, worin $R^1$, $R^2$, $R^3$, $R^4$, $R^5$, $R^6$, $R^7$ und $R^8$ gleich oder verschieden sind und ein Wasserstoffatom oder einen Kohlenwasserstoffrest, bevorzugt einen $C_6$-$C_{10}$-Arylrest oder einen $C_1$-$C_8$-Alkylrest, bedeuten, wobei gleiche Reste in den verschiedenen Formeln eine unterschiedliche Bedeutung haben können, polymerisiert.

Gegebenenfalls wird auch ein monocyclisches Olefin der Formel VII

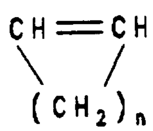

(VII),

worin n eine Zahl von 2 bis 10 ist, verwendet. Ein anderes Comonomer ist ein acylisches 1-Olefin der Formel VIII,

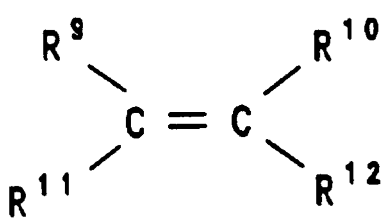

(VIII)

worin $R^9$, $R^{10}$, $R^{11}$ und $R^{12}$ gleich oder verschieden sind und ein Wasserstoffatom oder einen $C_1$-$C_8$-Alkylrest bedeuten. Bevorzugt sind Ethylen oder Propylen.

Insbesondere werden Copolymere von polycyclischen Olefinen, vorzugsweise der Formeln I und III, mit den acyclischen Olefinen der Formel VIII hergestellt.

Besonders bevorzugte Cycloolefine sind Norbornen und Tetracyclododecen, wobei diese durch ($C_1$-$C_6$)-Alkyl substituiert sein können. Sie werden vorzugsweise mit Ethylen copolymerisiert; besondere Bedeutung besitzen Ethylen/Norbornen-Copolymere.

Das polycyclische Olefin der Formeln I, II, III, IV, V oder VI wird in einer Menge von 0,1 bis 100 Gew.-% und das monocyclische Olefin der Formel VII in einer Menge von 0 bis 99,9 Gew.-% jeweils bezogen auf die Gesamtmenge der Monomeren, eingesetzt.

Die Konzentration des acyclischen Olefins der Formel VIII ergibt sich aus der Löslichkeit des acyclischen Olefins in dem Reaktionsmedium bei gegebenem Druck und gegebener Temperatur.

Als polycyclische Olefine, monocyclische Olefine und acyclische Olefine sind auch Gemische zweier oder mehrerer Olefine des jeweiligen Typs zu verstehen. Das heißt, es können neben polycyclischen Homopolymeren und Bicopolymeren auch Ter- und Multicopolymere nach dem erfindungsgemäßen Verfahren hergestellt werden. Auch Copolymere der Cycloolefine der Formel VII mit den acyclischen Olefinen der Formel VIII lassen sich vorteilhaft nach dem beschriebenen Verfahren erhalten. Von den Cycloolefinen der Formel VII ist Cyclopenten, das substituiert sein kann, bevorzugt.

Der für das erfindungsgemäße Verfahren verwendende Katalysator besteht aus einem Aluminoxan und mindestens einem Metallocen (Übergangsmetallkomponente) der Formel XI

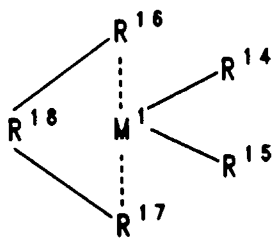

(XI)

In Formel XI ist $M^1$ ein Metall aus der Gruppe Titan, Zirkon, Hafnium, Vanadium, Niob und Tantal, vorzugsweise Zirkon und Hafnium. Besonders bevorzugt wird Zirkon verwendet.

$R^{14}$ und $R^{15}$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^{16}$ ist eine Fluorenylgruppe und $R^{17}$ ist eine Cyclopentadienylgruppe, wobei mindestens einer der beiden Reste $R^{16}$ und $R^{17}$ einen oder mehrere Reste $R^{21}$ trägt, die gleich oder verschieden sind und $R^{21}$ eine $C_1$-$C_{10}$-, vorzugsweise $C_1$-$C_4$-Alkylgruppe, besonders bevorzugt eine tertiäre Butylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe bedeutet. Bevorzugt ist $R^{16}$ durch einen oder mehrere Reste $R^{21}$, insbesondere durch $C_1$-$C_{10}$-Alkyl, substituiert und $R^{17}$ unsubstituiert.

$R^{18}$ ist eine ein- oder mehrgliedrige Brücke, welche die Reste $R^{16}$ und $R^{17}$ verknüpft und bedeutet

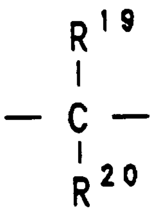

oder

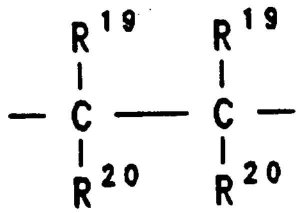

, worin $R^{19}$ und $R^{20}$ gleich oder verschieden sind und ein Wasserstoffatom, ein Halogenatom oder einen kohlenstoffhaltigen Substituenten, z.B. eine $C_1$-$C_{10}$-Alkylgruppe, eine $C_1$-$C_{10}$-Fluoralkylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder

eine $C_7$-$C_{40}$-Alkylarylgruppe bedeuten oder $R^{19}$ und $R^{20}$ jeweils mit den sie verbindenden Atomen einen Ring bilden, bevorzugt sind $R^{19}$ und $R^{20}$ ein Halogenatom oder ein kohlenstoffhaltiger Substituent z.B. eine $C_1$-$C_{10}$-Alkylgruppe, eine $C_1$-$C_{10}$-Fluoralkylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe, besonders bevorzugt eine $C_1$-$C_{10}$-Alkylgruppe und eine $C_6$-$C_{10}$-Arylgruppe,

Bevorzugt ist $R^{18}$ ein Rest

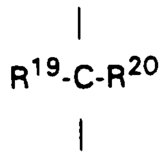

und besonders bevorzugt

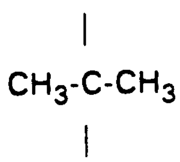 oder 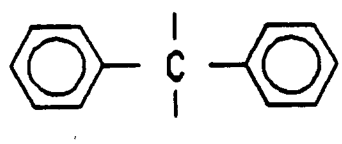

Bevorzugt eingesetzte Metallocene sind:
Diphenylmethylen-(9-(2,7-di-tert.butyl)fluorenyl)-cyclopentadienyl-zirkondichlorid,
Isopropylen-(9-(2,7-di-tert.butyl)fluorenyl)-cyclopentadienyl-zirkondichlorid,
Isopropylen-(9-(2,7-di-methyl)fluorenyl)-cyclopentadienyl-zirkondichlorid oder Gemische aus mindestens zwei dieser Katalysatoren.

Besonders bevorzugt ist:
Diphenylmethylen-(9-(2,7-di-tert.butyl)fluorenyl)-cyclopentadienyl-zirkondichlorid.

Die Substitution des Fluorens erfolgt durch literaturbekannte Syntheseschritte (Liebigs Ann. 1976, Seite 74; Synthesis 1984, Seite 335 auf die hiermit ausdrücklich Bezug genommen werden soll); weiter werden die verbrückten Metallocene z.B. nach den aus der EP 485893 bekannten Reaktionsschemata hergestellt.

Das Aluminoxan weist bevorzugt die Formel IX und/oder Formel X auf. In diesen Formeln können die Reste $R^{13}$ gleich oder verschieden sein
und bedeuten eine $C_1$-$C_6$-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 0 bis 50, bevorzugt 5 bis 40.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen $R^{13}$ werden entsprechend der gewünschten Zusammensetzung zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 302 424).

Die genaue räumliche Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist auch möglich, das Aluminoxan auf einen Träger aufzubringen und es dann als Suspension in geträgerter Form einzusetzen. Es sind mehrere Trägerungsverfahren bekannt (EP 92107331.8), z.B. kann Kieselgel als Träger fungieren.

Es ist möglich, das Metallocen vor dem Einsatz in der Polymerisationsreaktion mit einem Aluminoxan der Formel IX und/oder X vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol

verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Das Metallocen wird bevorzugt als Racemat eingesetzt. Es kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel $R_xNH_{4-x}BR'_4$ oder der Formel $R_3PHBR'_4$ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (EP-A 277 004).

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Metallocenverbindung wird in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis 2 : $10^{-2}$ mol pro $dm^3$ Reaktorvolumen verwendet, bezogen auf den Gehalt an Aluminium. Prinzipiell sind aber auch höhere Konzentrationen möglich.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 80 Mol-% der cyclischen Komponenten und besonders bevorzugt werden Einbauraten zwischen 40 und 60 Mol-% der cyclischen Komponenten.

Die Polymerisation kann auch mehrstufig erfolgen, wobei auch Blockcopolymere entstehen können (P 42 05 416.8).

Die nach dem erfindungsgemäßen Verfahren hergestellten Cycloolefinpolymere weisen Viskositätszahlen VZ zwischen 25 und 600 $cm^3/g$, bevorzugt zwischen 75 und 140 $cm^3/g$, besonders bevorzugt zwischen 100 und 120 $cm^3/g$ und Glastemperaturen im Bereich von 80 bis 250 °C, bevorzugt von 130 bis 220 °C, besonders bevorzugt von 150 bis 190 °C auf. Außerdem haben sie niedrige Polydispersitäten $M_w/M_n$ von 1,9 - 3,5. Sie sind für Spritzgußanwendungen, insbesondere für Dünnwandspritzgußanwendungen, gut geeignet und lassen sich zur Herstellung von Spritzgußartikeln beliebiger Form und Größe verwenden.

Eine weitere Eigenschaft der erfindungsgemäß hergestellten Cycloolefinpolymere ist ihre Transparenz. Dadurch kommt besonders den optischen Anwendungen der spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

In schlagzähmodifizierter Form sind die erfindungsgemäßen Materialien als Strukturwerkstoff in verschiedenen technischen Bereichen einsetzbar (P 4 213 219.3).

Die erfindungsgemäßen Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Die in den folgenden Beispielen angegebenen Glastemperaturen Tg wurden mittels DSC (Differential Scanning Calorimetry) bei einer Aufheizrate von 20 °C/min bestimmt. Die angegebenen Viskositätszahlen wurden gemäß DIN 53 728 ermittelt.

Beispiel 1:

Ein 1,5-$dm^3$-Reaktor wurde mit Ethylen gefüllt und mit 600 $cm^3$ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 6.0 bar (Überdruck) eingestellt, 5 $cm^3$ toluolische Methylaluminoxanlösung (10,1 Gew.-% Methylaluminoxan der Molmasse 1300 g/Mol nach kryoskopischer Bestimmung) in den Reaktor gegeben und 15 min bei 70 °C gerührt. Eine Lösung von 2,7 mg Diphenylmethylen(9-(2,7-di-tert.-butyl)fluorenyl)-cyclopentadienylzirkondichlorid in 5 $cm^3$ toluolischer Methylaluminoxanlösung wurde nach 15 minütiger Voraktivierung zugegeben.

Unter Rühren (750 UPM) wurde eine Stunde bei 70 °C polymerisiert, wobei der Ethylendruck durch Nachdosieren bei 6,0 bar gehalten wurde.

Die Reaktionslösung wurde in ein Gefäß abgelassen und schnell in 5 $dm^3$ Aceton eingetropft, 10 min gerührt und anschließend filtriert.

Der erhaltene Feststoff wurde mehrfach mit 10 %iger Salzsäure und Aceton im Wechsel gewaschen. Es wurde neutral gewaschen und nochmals mit Aceton gerührt. Das erneut filtrierte Polymer wurde bei 80 °C und einem Druck von 0,2 bar 15 Stunden getrocknet.

Es wurden 34 g eines farblosen Polymers erhalten. Es wurde eine Viskositätszahl von 119 $cm^3/g$ und eine Glastemperatur Tg von 155 °C gemessen (Tabelle 1).

Beispiel 2:

Die Polymerisation wurde analog zu Beispiel 1 durchgeführt, wobei die experimentellen Parameter gemäß Tabelle 1 variiert wurden.

Beispiel 3 (Vergleichsbeispiel zu Beispiel 2):

Ein 1,5 $dm^3$-Reaktor wurde mit Ethylen gefüllt und mit 600 $cm^3$ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 3,0 bar (Überdruck) eingestellt, 5 $cm^3$ toluolische Methylaluminoxanlösung (10,1 Gew.-% Methylaluminoxan der Molmasse 1300 g/Mol nach kryoskopischer Bestimmung) in den Reaktor gegeben und 15 min bei 40 °C gerührt. Eine Lösung von 17,9 mg Diphenylmethylen-(9-fluorenyl)cyclopentadienylzirkondichlorid in 5 $cm^3$ toluolischer Methylaluminoxanlösung wurde nach 15 minütiger Voraktivierung zugegeben.

Unter Rühren (750 UPM) wurde eine Stunde bei 40 °C polymerisiert, wobei der Ethylendruck durch Nachdosieren bei 3,0 bar gehalten wurde.

Die Reaktionslösung wurde in ein Gefäß abgelassen und schnell in 5 $dm^3$ Aceton eingetragen, 10 min gerührt und anschließend das ausgefallene Produkt filtriert. Der Filterkuchen wurde mehrfach mit 10 %iger Salzsäure und Aceton im Wechsel gewaschen. Abschließend wurde neutral gewaschen und mit Aceton gerührt. Das so gewaschene Polymer wird abfiltriert und bei 80 °C und einem Druck von 0,2 bar 15 Stunden getrocknet.

Es wurden 100 g eines farblosen Polymers erhalten. An dem Polymer wurde eine Viskositätszahl von 187 $cm^3/g$ und eine Glastemperatur von 169 °C gemessen.

Beispiel 4 und 5 (Vergleichsbeispiele zu Beispiel 1):

Die Polymerisationen wurden analog zu Beispiel 1 durchgeführt, wobei andere Katalysatoren verwendet wurden (siehe Tabelle 1).

Beispiel 6 (Massepolymerisation):

Ein sauberer und trockener 1,5-$dm^3$-Polymerisationsreaktor mit Rührer wurde mit Stickstoff und dann mit Ethylen gespült und mit 560 g Norbornen-Schmelze bei 70 °C gefüllt. Unter Rühren wurde dann der Reaktor bei einer Temperatur von 70 °C gehalten und 6 bar Ethylen (Überdruck) aufgedrückt.

Danach wurden 5 $cm^3$ toluolische Methylaluminoxanlösung (MAO-Lsg.), (10,1 Gew.-% Methylaluminoxan mit Molmasse 1300 g/mol nach kryoskopischer Bestimmung) in den Reaktor dosiert und die Mischung 15 min bei 70 °C gerührt, wobei durch Nachdosieren der Ethylendruck bei 6 bar gehalten wurde. Parallel dazu wurden 2,4 mg Diphenylmethylen(9-(2,7-di-tert.-butyl)fluorenyl)-cylcopentadienylzirkondichlorid in 5 $cm^3$ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann Stunden bei 70 °C polymerisiert, wobei der Ethylendruck durch Nachdosieren bei 6 bar gehalten wurde.

Die Reaktionslösung wurde in ein Gefäß abgelassen und schnell in 5 $dm^3$ Aceton eingetragen, 10 min gerührt und anschließend filtriert.

Der erhaltene Feststoff wurde mehrfach mit 10 %iger Salzsäure und Aceton im Wechsel gewaschen. Es wurde neutral gewaschen und nochmals mit Aceton gerührt. Das erneut filtrierte Polymer wurde bei 80 °C und einem Druck von 0,2 bar 15 Stunden getrocknet.

Es wurden 30 g eines farblosen Polymers erhalten. Es wurde eine Viskositätszahl von 135 $cm^3/g$ und eine Glastemperatur Tg von 161 °C gemessen.

Beispiel 7 (Vergleichsbeispiel zu Beispiel 6):

Die Polymerisationen wurden analog Beispiel 6 durchgeführt, wobei ein anderer Katalysator verwendet wurde (siehe Tabelle 1).

Tabelle 1: Polymerisation bei angegebener Temperatur und Druck, Ausbeute normiert auf 1 h Reaktionsdauer

| Bsp. | Metallocen | Temp. | Druck | Menge Mc | Ausbeute | VZ | Tg | Verfahren |
|---|---|---|---|---|---|---|---|---|
| Nr. | (Mc) | (°C) | (bar) | (mg) | (g) | ($cm^3/g$) | (°C) | (Toluol |
| 1 | A | 70 | 6 | 2,7 | 34 | 119 | 155 | 85 %ige Lsg. |
| 2 | A | 40 | 3 | 7,8 | 32 | 100 | 158 | 85 %ige Lsg. |
| 3 | B | 40 | 3 | 17,9 | 32 | 187 | 169 | 85 %ige Lsg. |
| | | | | | | | | |
| 4 | B | 70 | 6 | 1,8 | 59 | 172 | 160 | 85 %ige Lsg. |
| 5 | C | 70 | 6 | 0,1 | 54 | 167 | 154 | 85 %ige Lsg. |
| 6 | A | 70 | 6 | 2,4 | 30 | 134 | 161 | Masse Nb |
| 7 | B | 70 | 6 | 1,8 | 60 | 208 | 167 | Masse Nb |

A = Diphenylmethylen(9-(2,7-di-tert.butyl(fluorenyl)cyclopentadienylzirkondichlorid,

B = Diphenylmethylen-(9-fluorenyl)-cyclopentadienyl-zirkondichlorid,

C = Isopropylen-(9-fluorenyl)-cyclopentadienyl-zirkondichlorid, Mc = Metallocen

Beispiel 8:

Synthese von Diphenylmethylen-(9-(2,7-di-tert.-butyl)fluorenyl)cylopentadienylzirkondichlorid

1. 2,7-Di-tert.-butylfluorenyl

Die Herstellung von 1 erfolgte in Analogie zu: Synthesis, 1984, 335, auf die hiermit ausdrücklich Bezug genommen wird.

2. Diphenyl(2,7-di-tert.-butyl-fluorenyl)cyclopentadienylmethan

Zu 20 g (72 mmol) 1 in 150 ml $O_2$- und $H_2O$-freiem THF unter Argon wurden unter Eiskühlung 30,2 ml (75,4 mmol) einer 2,5 M Lsg. von Butyllithium in Hexan getropft und 15 h bei Raumtemperatur weiter gerührt. Anschließend wurde auf -78 °C gekühlt und 17,4 g (75,4 mmol) Diphenylfulven (Aldrich) zugegeben, langsam auf Raumtemperatur erwärmen lassen und 15 h weiter gerührt. Das Reaktionsgemisch wurde auf 300 ml Wasser gegossen und 3mal mit je 250 ml $Et_2O$ extrahiert. Die vereinigten organischen Phasen wurden getrocknet $MgSO_4$ und das Lösemittel im Vakuum entfernt. Nach Kristallisation aus $Et_2O$ wurden 23 g (63%) 2 als farblose Kristalle erhalten. Das in $CDCl_3$ gemessene $^1$H-NMR-Spektrums weist folgende Signale auf (in ppm): 7,0 - 7,4 (m, 16 H, arom. H), 6,1 - 6,5 (m, 3 H, Cp-CH), 5,5 (s, 1 H, Flu-H), 3,0 (m, 2H, Cp-$CH_2$), 1,1 (s, 18 H, t-Bu-$CH_3$).

3. Diphenylmethylen(9-(2,7-di-tert.-butyl)fluorenyl)cylopentadienylzirkondichlorid

Zu 6,0 g (11,8 mmol) 2 in 100 ml $O_2$- und $H_2O$-freiem THF unter Argon wurden bei Raumtemperatur 10,4 ml (26,2 mmol) einer 2,5 M Lsg. von Butyllithium in Hexan gegeben und 2 h zum Rückfluß erhitzt. Das Lösemittel wurde im Vakuum entfernt, der Rückstand mehrmals mit Hexan gewaschen und anschließend 2 h bei 0,1 Torr und 40 °C getrocknet. Das tiefrote Dilithiosalz wurde in 120 ml $O_2$- und $H_2O$-freiem Toluol aufgenommen und bei 0 °C 2,75 g (11,8 mmol) $ZrCl_4$ zugegeben. Es wurde noch 15 h bei Raumtemperatur weiter gerührt und anschließend über eine G3-Fritte filtriert. Das Filtrat wurde bis zur Trübung mit Hexan versetzt und bei -35 °C kristailisieren lassen. Es wurden 0,95 g (12%) 3 als ziegelrotes Pulver erhalten. Das in $CDCl_3$ gemessene $^1$H-NMR-Spektrums weist folgende Signale auf (in ppm): 7,1 - 7,6 (m, 16 H, arom. H), 6,3 und 5,7 (m, je 2H, Cp-H), 1,1 (s, 18 H, t-Bu-$CH_3$).
Das massenspektroskopisch bestimmte Molekulargewicht beträgt 666 g/mol.

## Patentansprüche

1. Verfahren zur Herstellung eines Cycloolefinhomopolymers oder -copolymers durch Polymerisation von 0,1 bis 100 Gew.-%, bezogen auf die Gesamtmenge der Monomeren, mindestens eines polyclischen Olefins der Formeln I, II, III, IV, V oder VI

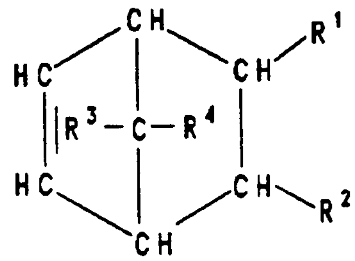

(I),

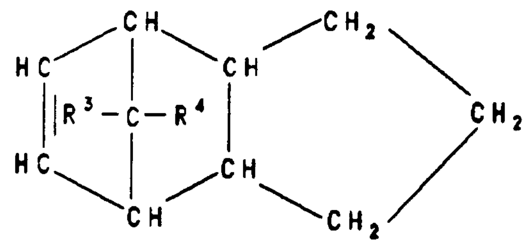

(II),

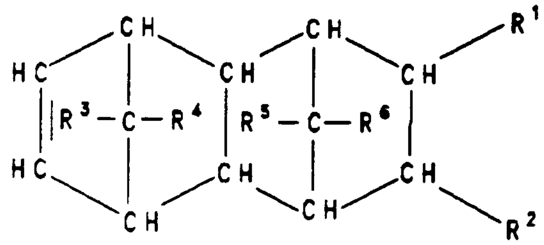

(III),

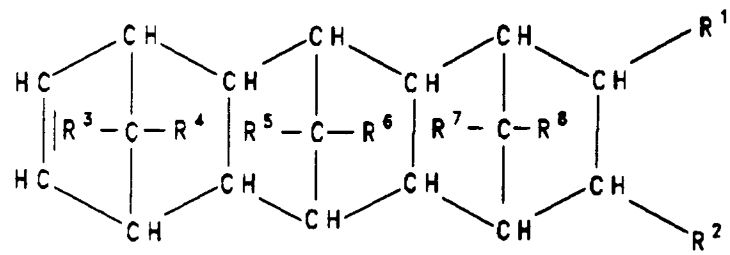

(IV),

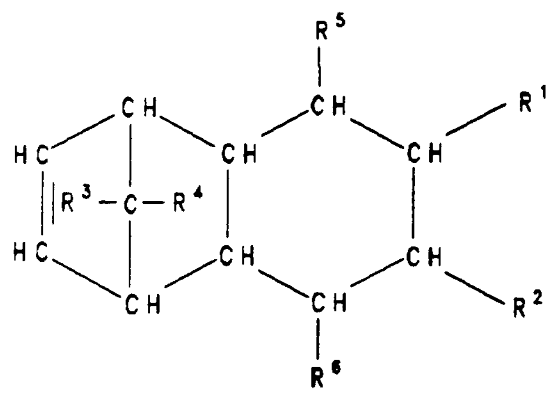

(V),

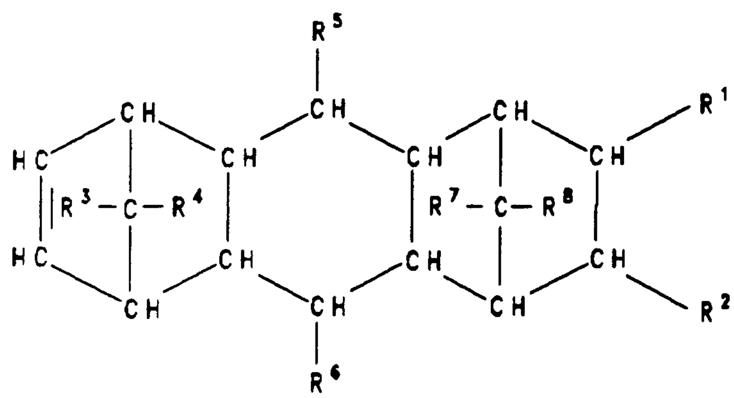

(VI),

worin $R^1$, $R^2$, $R^3$, $R^4$, $R^5$, $R^6$, $R^7$ und $R^8$ gleich oder verschieden sind und ein Wasserstoffatom oder einen Kohlenwasserstoffrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel VII

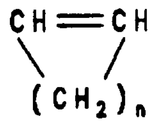 (VII),

worin n eine Zahl von 2 bis 10 ist, und 0 bis 99,9 Gew.-%, bezogen auf die Gesamtmenge der Monomeren, mindestens eines acyclischen 1-Olefins der Formel VIII

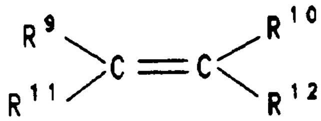 (VIII),

worin $R^9$, $R^{10}$, $R^{11}$ und $R^{12}$ gleich oder verschieden sind und ein Wasserstoffatom oder einen Kohlenwasserstoffrest bedeuten, bei Temperaturen von 20 bis 150 °C und einem Druck von 0,01 bis 64 bar, in Gegenwart eines Katalysators, welcher aus einem Aluminoxan der Formel IX

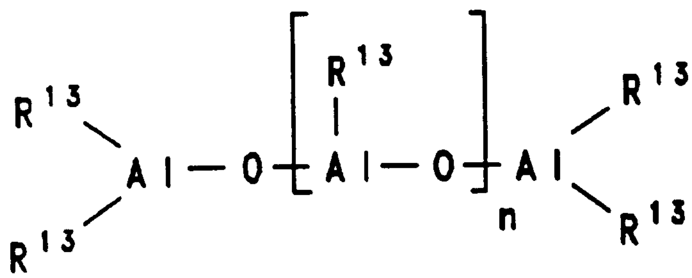 (IX)

für den linearen Typ und/oder der Formel X

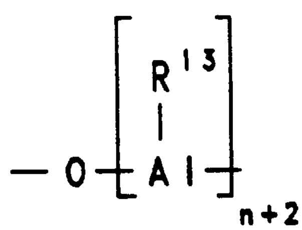 (X)

für den cyclischen Typ, wobei in den Formeln IX und X der Rest $R^{13}$ eine $C_1$-$C_6$-Alkylgruppe oder Phenyl oder Benzyl bedeutet und n eine ganze Zahl von 2 bis 50 ist, und einem Metallocen der Formel XI

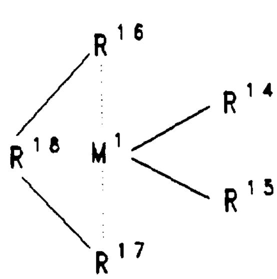 (XI)

besteht, worin

$M^1$ Titan, Zirkon, Hafnium, Vanadium, Niob oder Tantal ist,

$R^{14}$ und $R^{15}$ gleich oder verschieden sind und ein Wasserstoffatom, ein Halgenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe oder eine $C_8$-$C_{40}$-Arylalkenylgruppe bedeuten,

$R^{16}$ eine Fluorenylgruppe und $R^{17}$ eine Cyclopentadienylgruppe bedeutet,

$R^{18}$

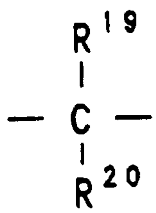 oder 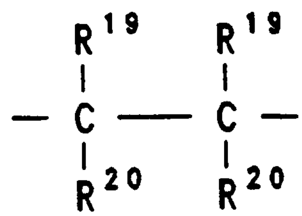

bedeutet, worin $R^{19}$ und $R^{20}$ gleich oder verschieden sind und ein $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^{19}$ und $R^{20}$ jeweils mit den sie verbindenden Atomen einen Ring bilden,
dadurch gekennzeichnet, daß mindestens einer der beiden Reste $R^{16}$ und $R^{17}$, einen oder mehrere Reste $R^{21}$ trägt, die gleich oder verschieden sind, wobei $R^{21}$ eine $C_1$-$C_{10}$-Alkylgruppe. eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeutet.

**2.** Verfahren gemäß Anspruch 1, dadurch gekennzeichnet, daß im flüssigen Cycloolefin selbst oder in verdünnter Cycloolefin-Lösung polymerisiert wird.

**3.** Verfahren gemäß Anspruch 1 oder 2, dadurch gekennzeichnet, daß als Metallocen der Formel XI
Diphenylmethylen-(9-(2,7-di-tert.butyl)fluorenyl)-cyclopentadienyl-zirkondichlorid,
Isopropyen-(9-(2,7-di-tert.butyl)fluorenyl)-cyclopentadienyl-zirkondichlorid,
Isopropylen-(9-(2,7-di-methyl)fluorenyl)-cyclopentadienyl-zirkondichlorid
oder Gemische aus mindestens zwei dieser Metallocene verwendet werden.

**4.** Verfahren gemäß einem oder mehreren der Ansprüche 1 bis 3, dadurch gekennzeichnet, daß das polycyclische Olefin Norbornen oder Tetracyclododecen ist.

**5.** Verfahren gemäß einem der Ansprüche 1 bis 4, dadurch gekennzeichnet, daß ein Copolymer aus Norbornen und Ethylen hergestellt wird.

**6.** Cycloolefinpolymer, herstellbar nach dem Verfahren gemäß einem oder mehreren der Ansprüche 1 bis 5.

**7.** Metallocen-Verbindung der Formel XI

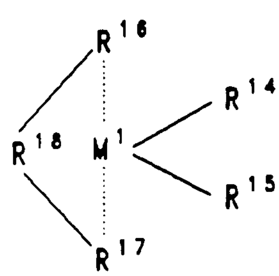 (XI)

, worin

$M^1$ Titan, Zirkon, Hafnium, Vanadium, Niob oder Tantal ist,

$R^{14}$ und $R^{15}$ gleich oder verschieden sind und ein Wasserstoffatom, ein Halgenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe oder eine $C_8$-$C_{40}$-Arylalkenylgruppe bedeuten,

$R^{16}$ eine Fluorenylgruppe und $R^{17}$ eine Cyclopentadienylgruppe bedeutet,

$R^{18}$

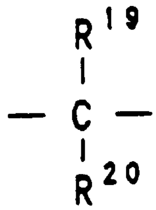

oder

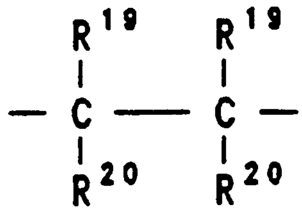

bedeutet, worin $R^{19}$ und $R^{20}$ gleich oder verschieden sind und ein Halogenatom oder einen kohlenstoffhaltigen Substituenten bedeuten, dadurch gekennzeichnet, daß der Rest $R^{16}$ einen oder mehrere Reste $R^{21}$ trägt, die gleich oder verschieden sind und $R^{21}$ $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten.

Europäisches Patentamt

# EUROPÄISCHER RECHERCHENBERICHT

Nummer der Anmeldung
EP 94 10 1803

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 503 422 (HOECHST)<br>* Anspruch 1 *<br>--- | 1-7 | C08F32/08<br>C07F17/00 |
| D,X | EP-A-0 485 893 (HOECHST)<br>* Anspruch 1 *<br>--- | 1-7 | |
| D,X | EP-A-0 407 870 (HOECHST)<br>* Anspruch 1 *<br>----- | 1-7 | |

RECHERCHIERTE SACHGEBIETE (Int.Cl.5)
C08F

Der vorliegende Recherchenbericht wurde für alle Patentansprüche erstellt

| Recherchenort | Abschlußdatum der Recherche | Prüfer |
|---|---|---|
| DEN HAAG | 22. April 1994 | Cauwenberg, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)